(19) Europäisches Patentamt
European Patent Office
Office européen des brevets

(11) Veröffentlichungsnummer: **0 075 249**
**B1**

(12) # EUROPÄISCHE PATENTSCHRIFT

(45) Veröffentlichungstag der Patentschrift: **13.02.85**

(51) Int. Cl.⁴: **A 01 N 43/78** // (A01N43/78, 43/76)

(21) Anmeldenummer: **82108461.3**

(22) Anmeldetag: **14.09.82**

(54) **Herbizide Mittel.**

(30) Priorität: **17.09.81 DE 3136913**

(43) Veröffentlichungstag der Anmeldung: **30.03.83 Patentblatt 83/13**

(45) Bekanntmachung des Hinweises auf die Patenterteilung: **13.02.85 Patentblatt 85/7**

(84) Benannte Vertragsstaaten: **AT CH DE FR GB IT LI NL**

(56) Entgegenhaltungen: **DE - A - 2 745 869**

(73) Patentinhaber: **HOECHST AKTIENGESELLSCHAFT, Postfach 80 03 20, D-6230 Frankfurt am Main 80 (DE)**

(72) Erfinder: **Schumacher, Hans, Dr., Claudiusstrasse 4, D-6093 Flörsheim am Main (DE)**
Erfinder: **Albrecht, Konrad, Dr., Sodener Strasse 64, D-6233 Kelkheim (Taunus) (DE)**
Erfinder: **Heinrich, Rudolf, Dr., Taunusstrasse 19, D-6233 Kelkheim (Taunus) (DE)**

**EP 0 075 249 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind herbizide Mittel, die gekennzeichnet sind durch einen Gehalt an einer Verbindung der Formel I,

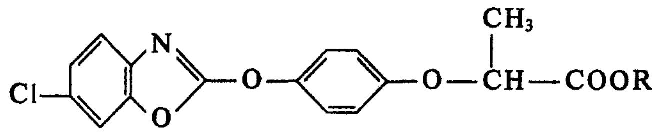

(I)

worin
R = Wasserstoff, $(C_1-C_4)$-Alkyl oder ein Kationäquivalent einer anorganischen oder organischen Base bedeutet,

in Kombination mit einer Verbindung der Formel II,

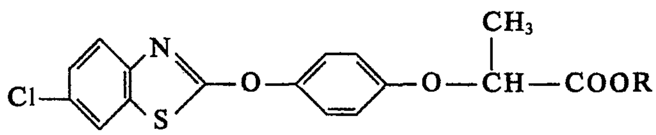

(II)

worin
R = Wasserstoff, $(C_1-C_4)$-Alkyl oder ein Kationäquivalent einer anorganischen oder organischen Base bedeutet.

Bevorzugte Verbindungen der Formel I und II sind diejenigen mit jeweils $R = C_2H_5$ ( = Verbindungen Ia bzw. IIa;
Verbindung Ia = Äthyl-2-[4-(6-chlor-2-benzoxazolyloxy)-phenoxy]-propionat
Verbindung IIa = Äthyl-2-[4-(6-chlor-2-benzthiazolyloxy)-phenoxy]-propionat)).

Die Verbindungen der Formel I und II besitzen in ihren Gruppierungen

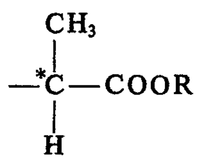

asymmetrische Kohlenstoffatome und liegen im allgemeinen als racemische Gemische enantiomerer Formen ( = Racemate) vor. Die enantiomeren Formen besitzen eine unterschiedschiedliche biologische Aktivität, wobei die Verbindungen der Formeln I und II mit D-Konfiguration eine gegenüber den Racematen und den Verbindungen mit L-Konfiguration erhöhte Wirksamkeiten aufweisen. Die erfindungsgemäßen Mittel umfassen daher neben den Racematen auch die enantiomeren Formen der Einzelwirkstoffe, insbesondere die D-Konfigurationen der Verbindungen der Formeln I und II.

Es ist bereits bekannt und z. B. in der DE-OS 26 40 730 beschrieben, daß sich die Verbindungen der Formeln I und II bei Einzelanwendung besonders zur selektiven Bekämpfung von ein- und mehrjährigen Gräsern in dikotylen Nutzpflanzenkulturen eignen. Die Verbindungen der Formel I zeigen dabei z. B. gute Wirkungen gegen verschiedene Ungräser wie Avena fatua, Digitaria sanguinalis, Echinochloa crus-galli, Eleusine indica, Setaria lutescens und Sorghum halepense.

Die Verbindungen der Formel II sind z. B. gut wirksam gegen Echinochloa crus-galli, Lolium-Arten, Avena fatua sowie gegen Kultur-Getreidearten. Sie sind aber unzureichend wirksam gegen Setaria-Arten, insbesondere gegen Setaria viridis und Setaria lutescens.

Der vorliegenden Erfindung lag somit u. a. die Aufgabe zugrunde, die bei Einzelanwendungen der Verbindungen der Formeln I und II teilweise unbefriedigenden herbiziden Wirksamkeiten zu verbessern und insbesondere ein Mittel zu finden, das gegen ein breiteres Spektrum von in dikotylen Nutzpflanzenkulturen üblicherweise vorkommenden ein- und mehrjährigen Schadgräsern sehr gut und selektiv wirksam ist.

Es wurde nun gefunden, daß sich bei der kombinierten Anwendung von Verbindungen der Formel I mit Verbindungen der Formel II eine überraschende synergistische herbizide Wirkung gegen ein- und mehrjährige Schadgräser bei sehr guter Selektivität gegenüber dikotylen Pflanzen zeigt.

Dabei liegt die herbizide Wirksamkeit erfindungsgemäßer Wirkstoffkombinationen aus Verbindungen der Formeln I und II deutlich höher als die Wirkung der Einzelkomponenten der Formel I bzw. II und auch höher als die Summe der Wirkungen der Einzelkomponenten. Die erfindungsgemäßen Wirkstoffkombinationen können daher mit Erfolg im Pflanzenschutz zur Bekämpfung von Schadgräsern, insbesondere zur selektiven Bekämpfung von ein- und mehrjährigen Gräser-Mischpopulationen in dikotylen

Nutzpflanzenkulturen, verwendet werden.

Das Mischungsverhältnis der Komponenten aus Verbindungen der Formel I und der Formel II ist erfindungsgemäß innerhalb weiter Grenzen variabel und kann zwischen 10 : 1 bis 1 : 10 liegen. Vorzugsweise liegt es zwischen 5 : 1 bis 1 : 5, insbesondere bevorzugt bei 1 : 1 bis 1 : 5.

Die erfindungsgemäßen Wirkstoffkombinationen eignen sich z. B. bevorzugt zur Bekämpfung von Echinochloa crus-galli, Setaria-Arten, Ausfallgetreide, Avena-Arten, Lolium-Arten, Digitaria und andere Wildhirsen, beispielsweisen in Kulturen wie Raps, Rüben, Flachs, Zwiebeln, Luzerne, Soja sowie anderen dikotylen Pflanzenkulturen. Die erfindungsgemäßen Kombinationen bieten insbesondere in solchen Fällen die größten Vorteile gegenüber der Einzelanwendung von Verbindungen der Formel I bzw. II, wo die genannten Schadgräser in Mischpopulationen vorkommen und kontrolliert werden müssen.

Erfindungsgemäße Wirkstoffkombinationen können entweder als Tankmischungen, bei denen die einzeln formulierten Wirkstoffkomponenten erst unmittelbar von der Applikation miteinander vermischt werden, oder als Fertigmischungen zur Anwendung gebracht werden.

Als Fertigmischungen können sie z. B. in Form von benetzbaren Pulvern, emulgierbaren Konzentraten, Dispersionen, Stäubemitteln, Granulaten oder versprühbaren Lösungen formuliert sein und enthalten dann gegebenenfalls die üblichen Formulierungshilfsmittel, wie Netz-, Emulgier-, Haft-, Dispergiermittel, feste oder flüssige Inertstoffe, Trägerstoffe, Mahlhilfsmittel und Lösungsmittel.

Benetzbare Pulver sind in Wasser gleichmäßig dispergierbare Präparate, die neben dem Wirkstoff außer gegebenenfalls Verdünnungs- bzw. Inertstoffen noch Netzmittel, z. B. polyoxäthylierte Alkylphenole, polyoxäthylierte Oleyl- oder Stearylamine, Alkyl- oder Alkylphenylsulfonate und Dispergiermittel, z. B. ligninsulfonsaures Natrium, 2,2′-dinaphthyl-methan-6,6′-disulfonsaures Natrium, dibutylnaphthalinsulfonsaures Natrium oder auch oleoylmethyltaurinsaures Natrium enthalten können.

Emulgierbare Konzentrate können beispielsweise durch Auflösen des Wirkstoffes in einem organischen Lösungsmittel, z. B. Butanol, Cyclohexanon, Dimethylformamid, Xylol, Isophoron oder auch höhersiedenden Aromaten unter Zusatz von einem oder mehreren Emulgatoren hergestellt werden. Als Emulgatoren können beispielsweise verwendet werden:

Alkylarylsulfonsaure Calciumsalze, Fettsäurepolyglykolester, Alkylarylpolyglykoläther, Fettalkoholpolyglykoläther, polyoxäthylierte Oleyl- oder Stearylamine, Propylenoxid-Äthylenoxid-Kondensationsprodukte, Alkylpolyäther, Sorbitan-Fettsäureester, Alkylaryl-Propylenoxid-Äthylenoxid-Kondensationsprodukte u. a.

Stäubemittel erhält man durch Vermahlen des Wirkstoffes mit fein verteilten, festen Stoffen, z. B. Talkum, natürlichen Tonen, wie Kaolin, Bentonit, Pyrophillit oder Diatomeenerde.

Granulate können entweder durch Verdüsen einer Lösung des Wirkstoffes auf adsorptionsfähiges, granuliertes Inertmaterial hergestellt werden oder durch Aufbringen von Wirkstoffkonzentraten mittels eines Bindemittels, z. B. Polyvinylalkohol, polyacrylsaurem Natrium, Methylhydroxyäthylcellulose oder auch Mineralölen auf die Oberfläche von Trägerstoffen, wie Sand, Kaolinite, oder von granuliertem Inertmaterial. Auch können geeignete Wirkstofformulierungen in der für die Herstellung von Düngemittelgranulaten üblichen Weise — gewünschtenfalls in Mischung mit Düngemitteln — hergestellt werden.

Die erfindungsgemäßen synergistischen Wirkstoffmischungen aus Verbindungen der Formeln I und II können in Form üblicher Zubereitungen, insbesondere als benetzbare Pulver, emulgierbare Konzentrate, Lösungen, Dispersionen, Stäubemittel oder Granulate formuliert werden. Der Gesamtwirkstoffgehalt der marktfähigen Formulierungen beträgt dann ca. 2 bis 95 Gew.-%, vorzugsweise 5 bis 80 Gew.-%, wobei der Rest zu 100 Gew.-% aus üblichen Formulierungshilfsmitteln, wie Haft-, Netz-, Emulgier-, Dispergier-, Füll-, Lösungsmitteln und Trägerstoffen besteht.

In benetzbaren Pulvern variiert die Gesamt-Wirkstoffkonzentration aus synergistischen Gemischen von Verbindungen der Formeln I und II im Bereich von etwa 10 bis 80 Gew.-%, der Rest zu 100 Gew.-% besteht aus üblichen Formulierungshilfsmitteln, bei emulgierbaren Konzentraten liegt sie im Bereich von etwa 10 bis 70 Gew.-%. Versprühbare Lösungen enthalten etwa 2 bis 20 Gew.-% an Wirkstoffgemisch. Bei Granulaten beträgt der Gesamt-Wirkstoffgehalt etwa 2 bis 10 Gew.-%. Staubförmige Formulierungen enthalten etwa 5 bis 20 Gew.-% an Wirkstoffgemisch.

Gegenstand der Erfindung sind daher auch herbizide Mittel mit einem Gehalt von 2 bis 95 Gew.-%, vorzugsweise 5 bis 80 Gew.-%, an einer Wirkstoffkombination aus Verbindungen der Formeln I und II, wobei der Rest zu 100 Gew.-% aus üblichen Formulierungshilfsmitteln besteht.

Zur Anwendung werden die genannten Konzentrate gegebenenfalls in üblicher Weise verdünnt, z. B. benetzbare Pulver, emulgierbare Konzentrate und Dispersionen mittels Wasser. Staubförmige und granulierte Zubereitungen sowie versprühbare Lösungen werden von der Anwendung im allgemeinen nicht mehr mit weiteren inerten Stoffen verdünnt. Mit den äußeren Bedingungen, wie Temperatur, Feuchtigkeit u. a. variiert auch die erforderliche Aufwandmenge an den erfindungsgemäßen Mitteln. Sie kann sich innerhalb weiter Grenzen bewegen und beträgt im allgemeinen zwischen 0,1 und 3 kg/ha Wirkstoffkombination, vorzugsweise 0,2 bis 1,5 kg/ha.

Die Erfindung wird durch die nachfolgenden Beispiele näher erläutert.

## A. Formulierungsbeispiele

### Beispiele 1 bis 4

Emulgierbare Konzentrate mit Gehalten an Wirkstoffkombinationen aus den Verbindungen Ia und IIa werden aus den in der nachstehenden Tabelle 1 für die Beispiele 1 bis 4 jeweils angegebenen Bestandteilen erhalten, indem man zunächst die Wirkstoffkombination in dem Gemisch aus den Lösungsmitteln Cyclohexanon und Xylol bei erhöhter Temperatur löst, der entstandenen Lösung anschließend unter kräftigem Rühren die drei Emulgatorkomponenten beimischt und das resultierende Gemisch unter weiterem Rühren schließlich auf Normaltemperatur abkühlt. In der Tabelle 1 sind außer den prozentualen Bestandteilsangaben für die Konzentrate noch die Anteile an Wirkstoffkombination in Gew.-% sowie das Gewichtsverhältnis der Verbindungen Ia : IIa in den Wirkstoffkombinationen zusammengefaßt wiedergegeben.

Tabelle 1

| | Beispiel Nr. 1 | 2 | 3 | 4 |
|---|---|---|---|---|
| Bestandteile:<br>Anteil der Bestandteile in Gew.-% | | | | |
| Verbindung Ia | 5 | 6,6 | 10 | 12,75 |
| Verbindung IIa | 15 | 13,4 | 10 | 4,25 |
| Cyclohexanon | 30 | 25 | 30 | 30 |
| Xylol | 17 | 20 | 17 | 20 |
| Fettalkoholpolyglykoläther | 18 | 18 | 18 | 18 |
| oxäthyliertes Rizinusöl | 10 | 9,5 | 9,5 | 9 |
| alkylbenzolsulfonsaures Calcium | 5 | 7,5 | 5,5 | 6 |
| Anteil der Verbindungen Ia + IIa in Gew.-% | 20 | 20 | 20 | 17 |
| Gew.-Verhältnis der Verbindungen Ia : IIa | 1 : 3 | 1 : 2 | 1 : 1 | 3 : 1 |

## B. Biologische Beispiele

### Beispiele I bis V

In den folgenden biologischen Beispielen I bis V wird bei den geprüften Wirkstoffkombinationen unterschieden zwischen dem aus den Wirkungen der Einzelanwendung der Wirkstoffkomponenten errechneten additiven Wirkungsgrad und dem experimentell gefundenen Wirkungsgrad der Wirkstoffkombinationen. Die Errechnung des additiven Wirkungsgrades erfolgt nach der Formel von S. R. Colby (vgl. Calculating synergistic and antagonistic responses of herbicide combinations, Weeds, 15, 1967, S. 20—22).

Diese Formel lautet:

$$E = X + Y - \frac{X \cdot Y}{100},$$

wobei

X = % Schädigung durch Herbizid A bei x kg/ha Aufwandmenge,
Y = % Schädigung durch Herbizid B bei y kg/ha Aufwandmenge,
E = die erwartete Schädigung der Herbizide A + B bei x + y kg/ha Aufwandmenge bedeuten.

Ist die tatsächliche Schädigung größer als berechnet, so ist die Wirkung der Wirkstoffkombination mehr als additiv, d. h., es liegt ein synergistischer Effekt vor. Dies wird in den folgenden biologischen Beispielen I bis V demonstriert, wobei in der rechten Spalte der zugehörigen Tabellen I bis V bei den Ergebnissen der Kombinationsbehandlungen in Klammern jeweils die aus obiger Formel errechnete additive Wirkung angegeben ist, während davor die tatsächlich erzielte Wirkung steht.

Testpflanzen von Lolium multiflorum, Avena fatua, Hordeum vulgare, Digitaria sanguinalis und Setaria lutescens, die getrennt in Pflanztöpfen im Gewächshaus jeweils bis zum 3-4-Blattstadium angezogen wurden, werden jeweils mit den in marktgängigen Formulierungen vorliegenden Verbindungen Ia und IIa in getrennten Versuchen einzeln sowie mit den gleichfalls formulierten Kombinationen Ia+IIa aus wäßrigen Spritzbrühen in den in den Tabellen I bis V angegebenen Mengen (in g Aktivsubstanz (AS) pro Hektar) bzw. Mischungsverhältnissen im Nachauflaufverfahren besprüht und in den Pflanztöpfen im Gewächshaus aufgestellt. Nach 4 Wochen wird der Wirkungsgrad der Schädigung der Testpflanzen (% Schädigung) im Vergleich zu den unbehandelten Kontrollpflanzen festgestellt.

Bei alleiniger Anwendung der Einzelwirkstoffe zeigt sich nach 4 Wochen nur in manchen Fällen eine deutliche Wirkung. Bei Anwendung erfindungsgemäßer Wirkstoffkombinationen ist die herbizide Wirkung dagegen in allen Fällen weitgehend gut bis sehr gut. Die Gegenüberstellung der nach der Colby-Formel errechneten additiven und der tatsächlich gefundenen Wirkungen bei Anwendung der Wirkstoffkombinationen zeigt außerdem, daß hier synergistische Effekte vorliegen. Die Ergebnisse der Beispiele I bis V sind in den nachstehenden Tabellen I bis V zusammengefaßt wiedergegeben.

## Beispiel I

Testpflanzen:
Lolium multiflorum (Weidelgras)

Tabelle I

| Behandlung mit Wirkstoff | Wirkstoffdosis (g AS/ha) | Wirkung (% Schädigung) auf Lolium multiflorum (Gewächshausversuch) nach 4 Wochen |
|---|---|---|
| Verbindung Ia | 5 | 11 |
| | 10 | 18 |
| Verbindung IIa | 5 | 43 |
| | 10 | 67 |
| Verbdgen. Ia+IIa (Gew.-Verh.=1 : 1) | 5 | 56 |
| | 10 | 88 (50) |

Beispiel II

Testpflanzen:
Avena fatua (Flughafer)

Tabelle II

| Behandlung mit Wirkstoff | Wirkstoff-dosis (g AS/ha) | Wirkung (% Schädigung) auf Avena fatua (Gewächshausversuch) nach 4 Wochen |
|---|---|---|
| Verbindung Ia | 5 | 0 |
| | 10 | 10 |
| | 20 | 38 |
| | 30 | 47 |
| Verbindung IIa | 5 | 0 |
| | 10 | 0 |
| | 20 | 30 |
| | 30 | 39 |
| Verbdgen. Ia + IIa (Gew.-Verh. = 1 : 1) | 20 | 46 (10) |
| | 40 | 70 (57) |
| | 60 | 90 (68) |

Beispiel III

Testpflanzen:
Hordeum vulgare (Gerste)

Tabelle III

| Behandlung mit Wirkstoff | Wirkstoff-dosis (g AS/ha) | Wirkung (% Schädigung) auf Hordeum vulgare (Gewächshausversuch) nach 4 Wochen |
|---|---|---|
| Verbindung Ia | 5 | 0 |
| | 10 | 0 |
| | 15 | 0 |
| | 20 | 10 |
| | 30 | 18 |
| Verbindung IIa | 5 | 10 |
| | 10 | 33 |
| | 15 | 56 |
| | 20 | 68 |
| | 30 | 86 |
| Verbdgen. Ia + IIa (Gew.-Verh. = 1 : 1) | 20 | 73 (33) |
| | 30 | 91 (56) |
| | 40 | 97 (72) |
| Verbdgen. Ia + IIa (Gew.-Verh. = 1 : 2) | 30 | 93 (68) |
| Verbdgen. Ia + IIa (Gew.-Verh. = 1 : 3) | 20 | 77 (56) |

Beispiel IV

Testpflanzen:
Digitaria sanguinalis (Fingerhirse)

Tabelle IV

| Behandlung mit Wirkstoff | Wirkstoff-dosis (g AS/ha) | Wirkung (% Schädigung) auf Digitaria sanguinalis (Gewächshausversuch) nach 4 Wochen |
|---|---|---|
| Verbindung Ia | 5 | 59 |
| | 10 | 94 |
| Verbindung IIa | 5 | 0 |
| | 10 | 0 |
| | 20 | 7 |
| Verbdgen. Ia + IIa (Gew.-Verh. = 1 : 1) | 10 | 95 (59) |
| Verbdgen. Ia + IIa (Gew.-Verh. = 1 : 2) | 30 | 100 (95) |

Beispiel V

Testpflanzen:
Setaria lutescens (gelbe Borstenhirse)

Tabelle V

| Behandlung mit Wirkstoff | Wirkstoff-dosis (g AS/ha) | Wirkung (% Schädigung) auf Setaria lutescens (Gewächshausversuch) nach 4 Wochen |
|---|---|---|
| Verbindung Ia | 5 | 60 |
| | 10 | 82 |
| Verbindung IIa | 5 | 7 |
| | 10 | 10 |
| | 20 | 11 |
| Verbdgen. Ia + IIa (Gew.-Verh. = 1 : 1) | 10 | 84 (63) |
| | 20 | 88 (84) |
| Verbdgen. Ia + IIa (Gew.-Verh. = 1 : 2) | 30 | 92 (84) |

**Patentansprüche**

1. Herbizide Mittel, gekennzeichnet durch einen Gehalt an einer Verbindung der Formel I,

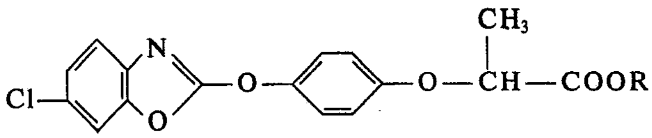

(I)

worin
R = Wasserstoff, ($C_1-C_4$)-Alkyl oder ein Kationäquivalent einer anorganischen oder organischen Base bedeutet

in Kombination mit einer Verbindung der Formel II,

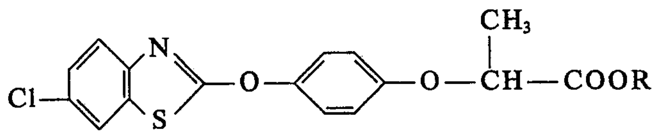

(II)

worin
R = Wasserstoff, ($C_1-C_4$)-Alkyl oder ein Kationäquivalent einer anorganischen oder organischen Base bedeutet.

2. Herbizide Mittel gemäß Anspruch 1, dadurch gekennzeichnet, daß das Mischungsverhältnis der Komponenten der Formeln I und II 10 : 1 bis 1 :10 beträgt.
3. Herbizide Mittel gemäß Anspruch 1, dadurch gekennzeichnet, daß das Mischungsverhältnis der Komponenten der Formeln I und II 5 : 1 bis 1 : 5 beträgt.
4. Herbizide Mittel gemäß Anspruch 1, dadurch gekennzeichnet, daß das Mischungsverhältnis der Komponenten der Formeln I und II 1 : 1 bis 1 : 5 beträgt.
5. Herbizide Mittel, gekennzeichnet durch einen Gehalt von 2 bis 95 Gew.-% an einer Wirkstoffkombination gemäß Ansprüchen 1 bis 3, wobei der Rest zu 100 Gew.-% aus üblichen Formulierungshilfsmitteln besteht.
6. Verwendung der Mittel gemäß Ansprüchen 1 bis 4 zur Bekämpfung von Schadpflanzen.
7. Verfahren zur Bekämpfung von Unkräutern, dadurch gekennzeichnet, daß man auf die von ihnen befallenen Flächen herbizide Mittel gemäß Ansprüchen 1 bis 4 in Mengen entsprechend 0,1 bis 3 kg/ha Wirkstoffkombination aufbringt.

**Claims**

1. Herbicidal compositions which comprise a compound of the formula I

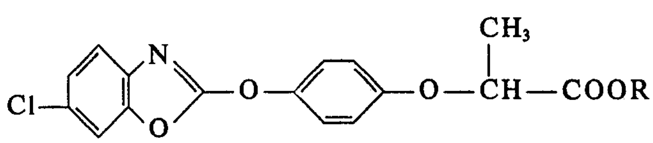

(I)

in which R is hydrogen, ($C_1-C_4$)-alkyl or a cation equivalent of an inorganic or organic base, in combination with a compound of the formula II

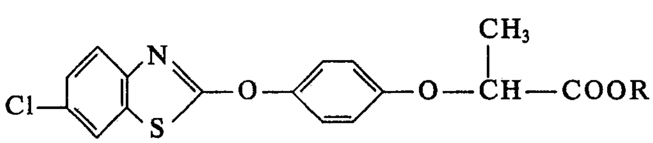

(II)

in which R is hydrogen, ($C_1-C_4$)-alkyl or a cation equivalent of an inorganic or organic base.
2. Herbicidal compositions as claimed in Claim 1, wherein the mixing ratio of the components of the formulae I and II is from 10 : 1 to 1 : 10.
3. Herbicidal compositions as claimed in Claim 1, wherein the mixing ratio of the components of the formulae I and II is from 5 : 1 to 1 : 5.
4. Herbicidal compositions as claimed in Claim 1, wherein the mixing ratio of the components of the formulae I and II is from 1 : 1 to 1 : 5.
5. Herbicidal compositions which comprise from 2 to 95 weight % of an active substance combination as claimed in Claims 1 to 3 the remainder up to 100 weight % consisting of usual formulation auxiliaries.

6. Use of the compositions as claimed in Claims 1 to 4 for combating noxious plants.

7. A process for combating weeds which comprises applying to areas infested therewith herbicidal compositions as claimed in Claims 1 to 4 in amounts corresponding to 0.1 to 3 kg/ha of active substance combination.

**Revendications**

1. Produits herbicides, caractérisés en ce qu'ils contiennent un composé de formule I

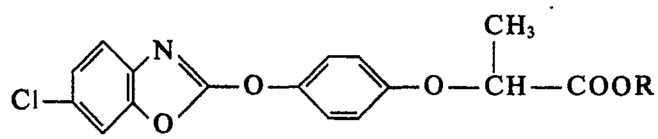

(I)

où R est l'hydrogène, un radical alkyle à 1—4 atomes de carbone ou un équivalent cationique d'une base inorganique ou organique, en association avec un composé de formule II,

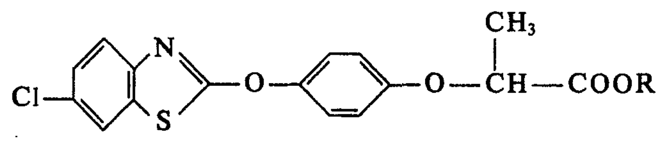

(II)

où R est l'hydrogène, un radical alkyle à 1—4 atomes de carbone ou un équivalent cationique d'une base inorganique ou organique.

2. Produits herbicides selon la revendication 1, caractérisés en ce que le rapport de mélange des composants des formules I et II est compris entre 10 : 1 et 1 : 10.

3. Produits herbicides selon la revendication 1, caractérisés en ce que le rapport de mélange des composants des formules I et II est compris entre 5 : 1 et 1 : 5.

4. Produits herbicides selon la revendication 1, caractérisés en ce que le rapport de mélange des composants de formules I et II est compris entre 1 : 1 et 1 : 5.

5. Produits herbicides, caractérisés en ce qu'ils contiennent de 2 à 95% en poids d'une association de matières actives selon les revendications 1 à 3, le complément à 100% en poids étant constitué d'adjuvants de formulation habituels.

6. Utilisation des produits selon les revendications 1 à 4, pour la lutte contre les plantes nuisibles.

7. Procédé de maîtrise de mauvaises herbes, caractérisé en ce qu'on applique sur les surfaces qui en sont infestées des produits herbicides selon les revendications 1 à 4 en des quantités correspondant à 0,1 à 3 kg/ha de l'association de matières actives.